# EUROPEAN PATENT APPLICATION

(11) **EP 4 723 458 A1**
(43) Date of publication of application: **08.04.2026**
(21) Application number: 25206359.9
(22) Date of filing: 02.10.2025
(51) Int. Cl.: H02M 1/34, H02M 5/293, H02M 1/00

(54) **NON-ISOLATED AC VOLTAGE CONVERSION CIRCUIT AND CONTROL METHOD THEREOF**

(30) Priority: 04.10.2024 US 202463703590 P
(71) Applicant: Delta Electronics, Inc., Neihu, Taipei 11491 (TW)
(72) Inventor: Wang, Dakai, Morrisville, NC 27560 (US); Li, Haiguo, Morrisville, NC 27560 (US); Kumar, Misha, Morrisville, NC 27560 (US); Zhu, Charles Lizhi, Plymouth Charter Twp, MI 48170 (US); Barbosa, Peter Mantovanelli, Morrisville, NC 27560 (US)
(74) Representative: Uexküll & Stolberg

(57) **Abstract**

A non-isolated AC voltage modulation circuit (1, 1a, 1b, 1c, 1d, 1e, 1f) includes an input terminal, an output terminal, a first switch bridge arm (B1), a second switch bridge arm (B2) and a voltage conversion circuit (2). The switch bridge arms (B1, B2) include switches (SW1, SW2, SW3, SW4) sequentially connected in series between a first and a third connection terminal (T1, T3) of the output terminal. The voltage conversion circuit (2) includes a resonant circuit (20, 20a, 20b, 20c) and a soft switch circuit (21, 21a, 21b, 21c). The resonant circuit (20, 20a, 20b, 20c) is connected between a first node (A) and a second node (B) among the switches (SW1, SW2, SW3, SW4). The soft switch circuit (21, 21a, 21b, 21c) includes a fourth connection terminal (211) connected to one of the first node (A) and the second node (B), and a fifth connection terminal (212) connected to one of the first, the second and the third connection terminals (T1, T2, T3) of the output terminal. Alternatively, the fourth connection terminal (211) is connected to a main resonant inductor of the resonant circuit (20, 20a, 20b, 20c), and the fifth connection terminal (212) is connected to the second connection terminal (T2).

## Description

### FIELD OF THE INVENTION

The present disclosure relates to the field of power conversion, and more particularly to a non-isolated AC voltage conversion circuit and a control method thereof.

### BACKGROUND OF THE INVENTION

Many loads, such as electric vehicles, require an AC voltage conversion circuit to convert AC voltage into a load voltage required by the loads. Consequently, the load is operated by using the load voltage provided by the AC voltage conversion circuit. Currently, the AC voltage conversion circuit employed in high-power application usually includes an autotransformer. The conversion of the load voltage is achieved by switching the outputs of the autotransformer with a central-tap.

However, an industrial frequency transformer (i.e., a transformer with an operating frequency of 50Hz or 60Hz) is usually served as the autotransformer, resulting in that the autotransformer has a larger magnetic core in size and a plurality of windings. Consequently, the autotransformer and the AC voltage conversion circuit using the autotransformer have the disadvantages of being large in overall size and heavy in weight.

Therefore, there is a need of providing a non-isolated AC voltage conversion circuit and a control method thereof in order to overcome the drawbacks of the conventional technologies.

### SUMMARY OF THE INVENTION

The present disclosure provides a non-isolated AC voltage conversion circuit and a control method thereof. By employing the non-isolated AC voltage conversion circuit and the control method of the present disclosure, the effects of reducing size and weight, reducing cost, reducing electromagnetic interference, and improving conversion efficiency and power density are achieved.

In accordance with an aspect of the present disclosure, a non-isolated AC voltage conversion circuit is provided. The non-isolated AC voltage conversion circuit includes an input terminal, an output terminal, a first switch bridge arm, a second switch bridge arm and a voltage conversion circuit. The input terminal includes a positive connection terminal and a negative connection terminal, and is configured to receive AC voltage. The output terminal includes a first connection terminal, a second connection terminal and a third connection terminal, and the third connection terminal is connected to the negative connection terminal. The first switch bridge arm is connected between the first connection terminal and the second connection terminal, and includes a first switch and a second switch connected in series. The first switch and the second switch are connected with each other to form a first node therebetween. The second switch bridge arm is connected between the second connection terminal and the third connection terminal, and includes a third switch and a fourth switch connected in series. The third switch and the fourth switch are connected with each other to form a second node therebetween. The voltage conversion circuit includes a resonant circuit and a soft switch circuit. The resonant circuit includes at least one main resonant inductor and at least one main resonant capacitor. The at least one main resonant inductor and the at least one main resonant capacitor are connected in series between the first node and the second node. The soft switch circuit includes a fourth connection terminal and a fifth connection terminal. The fourth connection terminal is connected to one of the first node and the second node, and the fifth connection terminal is connected to one of the first connection terminal, the second connection terminal and the third connection terminal. Alternatively, the fourth connection terminal is connected to the at least one main resonant inductor, and the fifth connection terminal is connected to the second connection terminal. The soft switch circuit is configured to provide soft switching conditions at transient times when the first switch, the second switch, the third switch, and the fourth switch are turned on and turned off, respectively.

In accordance with another aspect of the present disclosure, a non-isolated AC voltage conversion circuit is provided. The non-isolated AC voltage conversion circuit includes an input terminal, an output terminal, a first switch bridge arm, a second switch bridge arm, and a voltage conversion circuit. The input terminal includes a positive connection terminal and a negative connection terminal and is configured to receive AC voltage. The output terminal includes a first connection terminal, a second connection terminal and a third connection terminal, and the third connection terminal is connected to the negative connection terminal. The first switch bridge arm is connected between the first connection terminal and the second connection terminal and includes a first switch and a second switch connected in series. The first switch and the second switch are connected with each other to form a first node therebetween. The second switch bridge arm is connected between the second connection terminal and the third connection terminal and includes a third switch and a fourth switch connected in series. The third switch and the fourth switch are connected with each other to form a second node therebetween. The voltage conversion circuit includes a resonant circuit and a soft switch circuit. The resonant circuit includes at least one main resonant inductor and at least one main resonant capacitor. The at least one main resonant inductor and the at least one main resonant capacitor are connected in series between the first node and the second node. The soft switch circuit includes an auxiliary resonant inductor, a fourth connection terminal and a fifth connection terminal. The auxiliary resonant inductor is connected between the fourth connection terminal and the fifth connection terminal. The fourth connection terminal is connected to the at least one main resonant inductor, and the fifth connection terminal is connected to the second connection terminal. The soft switch circuit is configured to provide soft switching conditions at transient times when the first switch, the second switch, the third switch and the fourth switch are turned on and turned off.

In accordance with a further aspect of the present disclosure, a control method for a non-isolated AC voltage conversion circuit is provided. The non-isolated AC voltage conversion circuit includes an input terminal, an output terminal, a first switch bridge arm, a second switch bridge arm, and a voltage conversion circuit. The input terminal includes a positive connection terminal and a negative connection terminal and is configured to receive AC voltage. The output terminal includes a first connection terminal, a second connection terminal and a third connection terminal, and the third connection terminal is connected to the negative connection terminal. The first switch bridge arm is connected between the first connection terminal and the second connection terminal and includes a first switch and a second switch connected in series. The first switch and the second switch are connected with each other to form a first node therebetween. The second switch bridge arm is connected between the second connection terminal and the third connection terminal and includes a third switch and a fourth switch connected in series. The third switch and the fourth switch are connected with each other to form a second node therebetween. The voltage conversion circuit includes a resonant circuit and a soft switch circuit. The resonant circuit includes at least one main resonant inductor and at least one main resonant capacitor. The at least one main resonant inductor and the at least one main resonant capacitor are connected in series between the first node and the second node. The soft switch circuit includes a fourth connection terminal and a fifth connection terminal. The fourth connection terminal is connected to at least one of the first node and the second node, and the fifth connection terminal is connected to one of the first connection terminal, the second connection terminal and the third connection terminal. Alternatively, the fourth connection terminal is connected to the at least one main resonant inductor, and the fifth connection terminal is connected to the second connection terminal. The soft switch circuit is configured to provide soft switching conditions at transient times when the first switch, the second switch, the third switch, and the fourth switch are turned on and turned off, respectively. The first switch includes a first transistor switch and a second transistor switch, the second switch includes a third transistor switch and a fourth transistor switch, the third switch includes a fifth transistor switch and a sixth transistor switch, and the fourth switch includes a seventh transistor switch and an eighth transistor switch. The first transistor switch, the second transistor switch, the third transistor switch, the fourth transistor switch, the fifth transistor switch, the sixth transistor switch, the seventh transistor switch and the eighth transistor switch are sequentially connected in series between the first connection terminal and the third connection terminal. The control method of the embodiment of the present disclosure includes the steps of: (S1) when the AC voltage is positive, the first transistor switch and the fifth transistor switch are turned on or turned off synchronously, the third transistor switch and the seventh transistor switch are turned on or turned off synchronously, the signals for controlling the first transistor switch and the third transistor switch are complementary with each other, and the second transistor switch, the fourth transistor switch, the sixth transistor switch and the eighth transistor switch are turned on continuously; and (S2) when the AC voltage is negative, the second transistor switch and the sixth transistor switch are turned on or turned off synchronously, the fourth transistor switch and the eighth transistor switch are turned on or turned off synchronously, the signals for controlling the second transistor switch and the fourth transistor switch are complementary with each other, and the first transistor switch, the third transistor switch, the fifth transistor switch and the seventh transistor switch are turned on continuously.

### BRIEF DESCRIPTION OF THE DRAWINGS

FIG. 1 is a schematic circuit diagram illustrating a non-isolated AC voltage conversion circuit according to a first embodiment of the present disclosure;
FIG. 2 is a schematic circuit diagram illustrating an exemplary control circuit of the AC voltage conversion circuit of FIG. 1;
FIG. 3 schematically shows the waveforms of the operating parameters for the non-isolated AC voltage conversion circuit of FIG. 1;
FIG. 4 is a timing diagram illustrating the operations of the first transistor switch to the eighth transistor switch of FIG. 1 when the AC voltage is positive;
FIG. 5 is a timing diagram illustrating the operations of the first transistor switch to the eighth transistor switch of FIG. 1 when the AC voltage is negative;
FIG. 6 is a schematic circuit diagram illustrating a non-isolated AC voltage conversion circuit according to a second embodiment of the present disclosure;
FIG. 7 is a schematic circuit diagram illustrating a non-isolated AC voltage conversion circuit according to a third embodiment of the present disclosure;
FIG. 8 is a schematic circuit diagram illustrating a non-isolated AC voltage conversion circuit according to a fourth embodiment of the present disclosure;
FIG. 9 is a schematic circuit diagram illustrating a non-isolated AC voltage conversion circuit according to a fifth embodiment of the present disclosure;
FIG. 10 is a schematic circuit diagram illustrating a non-isolated AC voltage conversion circuit according to a sixth embodiment of the present disclosure;
FIG. 11 is a schematic circuit diagram illustrating a non-isolated AC voltage conversion circuit according to a seventh embodiment of the present disclosure; and
FIG. 12 is a flow chart illustrating a control method of the non-isolated AC voltage conversion circuit according to an embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. When an element is referred to as being "connected," or "coupled," to another element, it can be directly connected or coupled to the other element or intervening elements may be present. Although the wide numerical ranges and parameters of the embodiment of the present disclosure are approximations, numerical values are set forth in the specific examples as precisely as possible. In addition, although the "first," "second" and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items.

In one embodiment, a non-isolated AC voltage conversion circuit is proposed. The non-isolated AC voltage conversion circuit includes an input terminal, an output terminal, a first switch bridge arm, a second switch bridge arm and a voltage conversion circuit. The input terminal includes a positive connection terminal and a negative connection terminal, and is configured to receive AC voltage. The output terminal includes a first connection terminal, a second connection terminal, and a third connection terminal. The third connection terminal is electrically connected to the negative connection terminal. The first connection terminal is electrically connected to the positive connection terminal. The first switch bridge arm is connected between the first connection terminal and the second connection terminal, and includes a first switch and a second switch connected in series. The first switch and the second switch are connected with each other to form a first node therebetween. The second switch bridge arm is connected between the second connection terminal and the third connection terminal, and includes a third switch and a fourth switch connected in series. The third switch and the fourth switch are connected with each other to form a second node therebetween. The voltage conversion circuit includes a resonant circuit and a soft switch circuit. The resonant circuit includes at least one main resonant inductor and at least one main resonant capacitor. The at least one main resonant inductor and the at least one main resonant capacitor are connected in series between the first node and the second node. The soft switch circuit includes a fourth connection terminal and a fifth connection terminal. The fourth connection terminal is connected to at least one of the first node and the second node. The fifth connection terminal is connected to the one of the first connection terminal, the second connection terminal and the third connection terminal. Alternatively, the fourth connection terminal is connected to the at least one main resonant inductor, and the fifth connection terminal is connected to the second connection terminal. The soft switch circuit is configured to provide soft switching conditions at transient times when the first switch, the second switch, the third switch, and the fourth switch are turned on and turned off. The non-isolated AC voltage conversion circuit of the embodiment of the present disclosure utilizes the voltage conversion circuit to cooperate with the first switch bridge arm and the second switch bridge arm to replace the autotransformer used in the conventional AC voltage conversion circuit. Consequently, the functions of converting voltage are achieved. In addition, since the autotransformer is omitted, the non-isolated AC voltage conversion circuit of the embodiment of the present disclosure can achieve the effects of reducing volume and weight. Various embodiments of the non-isolated AC voltage conversion circuit of the present disclosure are described as follows. The circuit topologies and operations of the non-isolated AC voltage conversion circuits mentioned in the following embodiments are similar to each other, and the same reference numerals and/or letters are used to depict the similar circuit topologies and operations of the components, and are not redundantly described hereafter.

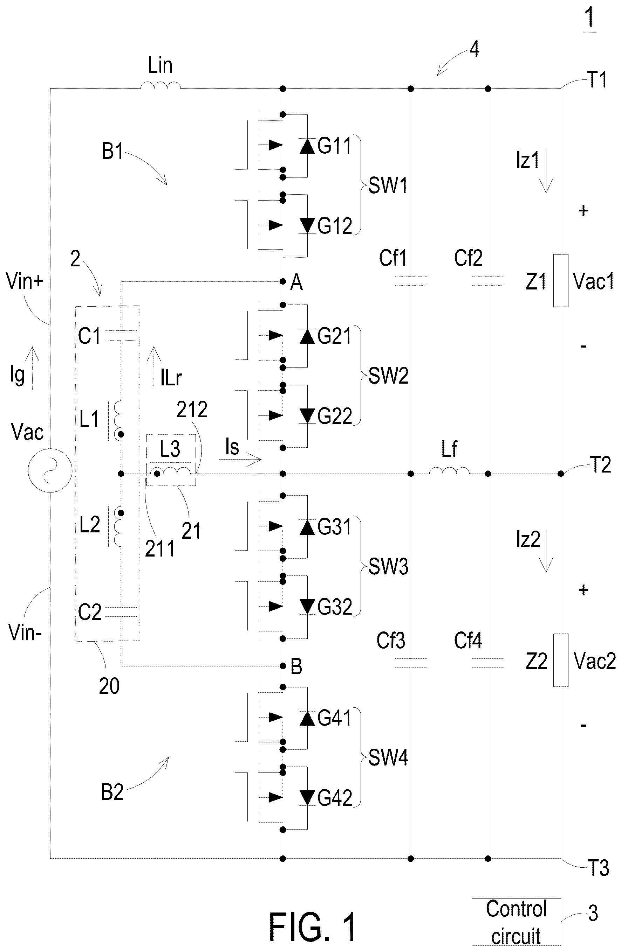

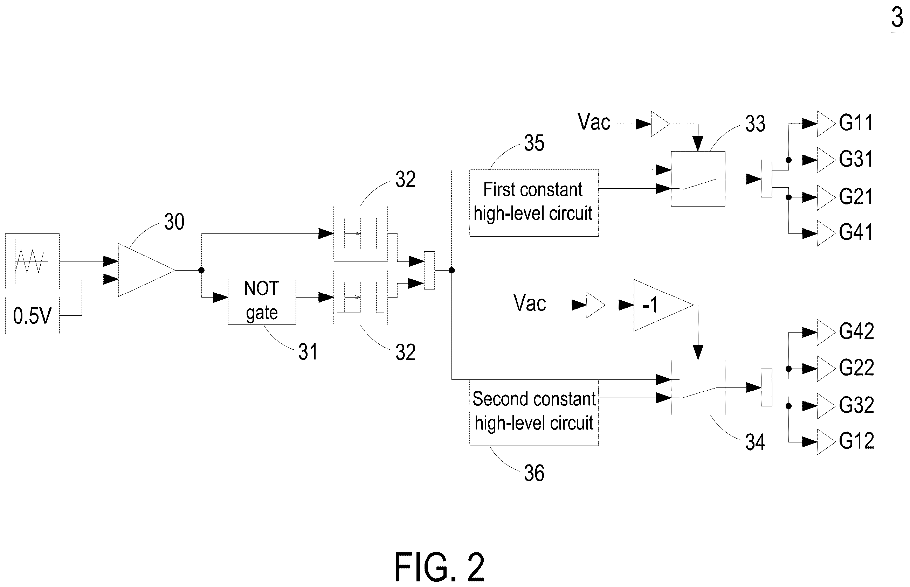

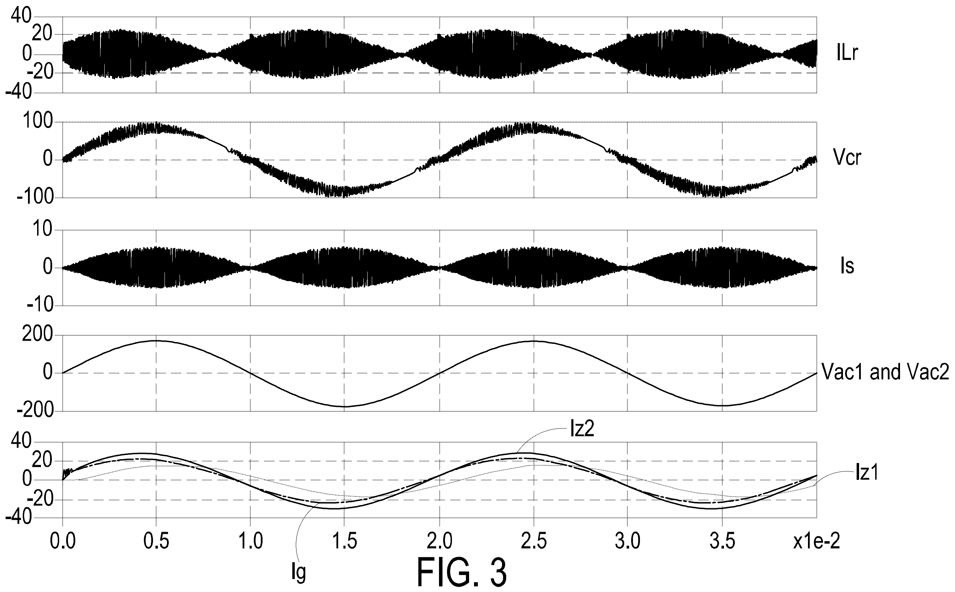

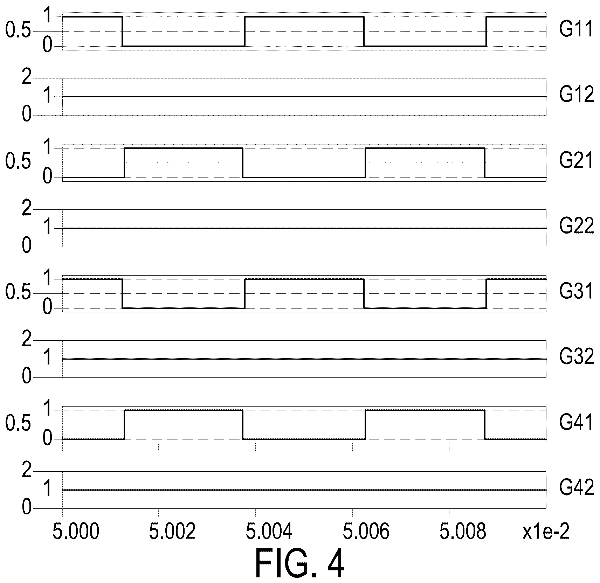

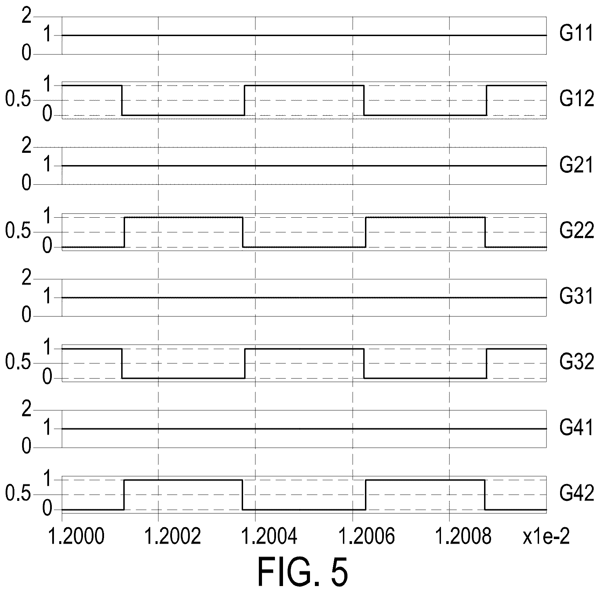

Please refer to FIGS. 1, 2, 3, 4 and 5. FIG. 1 is a schematic circuit diagram illustrating a non-isolated AC voltage conversion circuit according to a first embodiment of the present disclosure. FIG. 2 is a schematic circuit diagram illustrating an exemplary control circuit of the AC voltage conversion circuit of FIG. 1. FIG. 3 schematically shows the waveforms of the operating parameters for the non-isolated AC voltage conversion circuit of FIG. 1. FIG. 4 is a timing diagram illustrating the operations of the first transistor switch to the eighth transistor switch of FIG. 1 when the AC voltage is positive. FIG. 5 is a timing diagram illustrating the operations of the first transistor switch to the eighth transistor switch of FIG. 1 when the AC voltage is negative. In the embodiment, the non-isolated AC voltage conversion circuit 1 is connected between an AC power source and at least one load and configured to convert the AC voltage Vac from the AC power source and output an output voltage with single voltage level or output voltages with different voltage levels.

Preferably but not exclusively, the non-isolated AC conversion circuit 1 is a conversion circuit with a bidirectional power conversion function. In the embodiment, the non-isolated AC conversion circuit 1 includes an input terminal, an output terminal, a first switch bridge arm B1, a second switch bridge arm B2, and a voltage conversion circuit 2. The input terminal includes a positive connection terminal Vin+ and a negative connection terminal Vin-, and is configured to receive AC voltage Vac from the AC power source. The output terminal includes a first connection terminal T1, a second connection terminal T2, and a third connection terminal T3. The third connection terminal T3 is electrically connected / coupled to the negative connection terminal Vin-. The first connection terminal T1 is electrically connected / coupled to the positive connection terminal Vin+. The first connection terminal T1 and the second connection terminal T2, the second connection terminal T2 and the third connection terminal T3, and the first connection terminal T1 and the third connection terminal T3 are connected to corresponding loads, respectively. In the embodiment of FIG. 1, an exemplary first load Z1 is connected between the first connection terminal T1 and the second connection terminal T2, and an exemplary second load Z2 is connected between the second connection terminal T2 and the third connection terminal T3. In some embodiments, a first output voltage Vac1 is provided through the first connection terminal T1 and the second connection terminal T2, a second output voltage Vac2 is provided through the second connection terminal T2 and the third connection terminal T3, and a third output voltage is provided through the first connection terminal T1 and the third connection terminal T3. The third output voltage is equal to the sum of the first output voltage Vac1 and the second output voltage Vac2.

The first switch bridge arm B1 is connected between the first connection terminal T1 and the second connection terminal T2 and includes a first switch SW1 and a second switch SW2 connected in series. The first switch SW1 and the second switch SW2 are connected with each other to form a first node A therebetween. The second switch bridge arm B2 is connected between the second connection terminal T2 and the third connection terminal T3, and includes a third switch SW3 and a fourth switch SW4 connected in series. The third switch SW3 and the fourth switch SW4 are connected with each other to form a second node B therebetween. In an embodiment, the first bridge arm B1 and the second bridge arm B2 include half-bridge arms, respectively. The voltage conversion circuit 2 includes a resonant circuit 20 and a soft switch circuit 21. The resonant circuit 20 realizes power transmission by resonance and switching operations of the first switch bridge arm B1 and the second switch bridge arm B2. The resonant circuit 20 includes a first main resonant inductor L1, a second main resonant inductor L2, a main resonant capacitor C1 and a second main resonant capacitor C2. A first terminal of the first main resonant capacitor C1 is connected to the first node A. A second terminal of the first main resonant capacitor C1 is connected to a first terminal of the main resonant inductor L1. A second terminal of the first main resonant inductor L1 is connected to a first terminal of the second main resonant inductor L2. A second terminal of the second main resonant inductor L2 is connected to a first terminal of the second main resonant capacitor C2. The second terminal of the second main resonant capacitor C2 is connected to the second node B.

The soft switch circuit 21 includes a fourth connection terminal 211 and a fifth connection terminal 212. The fourth connection terminal 211 is connected to the second terminal of the first main resonant inductor L1 and the first terminal of the second main resonant inductor L2. The fifth connection terminal 212 is connected to the second connection terminal T2. In some embodiments, the soft switch circuit 21 includes an auxiliary resonant inductor L3. A first terminal of the auxiliary resonant inductor L3 is connected to the fourth connection terminal 211 of the soft switch circuit 21, and a second terminal of the auxiliary resonant inductor L3 is connected to the fifth connection terminal 212 of the soft switch circuit 21.

In some embodiments, the resonant circuit 20 and the auxiliary resonant inductor L3 may be implemented into an integrated magnetic module. In some embodiments, the first main resonant inductor L1, the second main resonant inductor L2, and the auxiliary resonant inductor L3 may be implemented into an integrated magnetic module.

In some embodiments, the non-isolated AC voltage conversion circuit 1 further includes a control circuit 3. The control circuit 3 is connected to the control terminals of the first switch SW1, the second switch SW2, the third switch SW3 and the fourth switch SW4, and configured to control the operations of the first switch SW1, the second switch SW2, the third switch SW3 and the fourth switch SW4. In addition, the control circuit 3 is connected to the input terminal of the non-isolated AC voltage conversion circuit 1, and configured to sense the AC voltage to determine whether the AC voltage is positive or negative. According to the determining results, the operations of the first switch SW1, the second switch SW2, the third switch SW3 and the fourth switch SW4 are controlled by the control circuit 3.

In some embodiments, each of the first switch SW1, the second switch SW2, the third switch SW3, and the fourth switch SW4 includes two transistor switches connected in series back-to-back (i.e., source electrodes of the two transistor switches are connected to each other). As shown in FIG. 1, the first switch SW1 includes a first transistor switch G11 and a second transistor switch G12 connected in series back-to-back. The second switch SW2 includes a third transistor switch G21 and a fourth transistor switch G22 connected in series back-to-back. The third switch SW3 includes a fifth transistor switch G31 and a sixth transistor switch G32 connected in series back-to-back. The fourth switch SW4 includes a seventh transistor switch G41 and an eighth transistor switch G42 connected in series back-to-back. Certainly, in some other embodiments, each of the first switch SW1, the second switch SW2, the third switch SW3, and the fourth switch SW4 includes single bidirectional resistor switch.

Please refer to FIG. 1 and 4. When the control circuit 3 determines that the AC voltage Vac is positive, the first transistor switch G11 and the fifth transistor switch G31 are turned on or turned off at high frequency synchronously under control of the control circuit 3. The third transistor switch G21 and the seventh transistor switch G41 are turned on or turned off at high frequency synchronously under control of the control circuit 3. The signals for controlling the first transistor switch G11 and the third transistor switch G21 are complementary to each other with 50% duty cycle under control of the control circuit 3. The second transistor switch G12, the fourth transistor switch G22, the sixth transistor switch G32 and the eighth transistor switch G42 are turned on continuously under control of the control circuit 3. Please refer to FIG. 1 and 5. When the control circuit 3 determines that the AC voltage Vac is negative, the second transistor switch G12 and the sixth transistor switch G32 are turned on or turned off at high frequency synchronously under control of the control circuit 3. The fourth transistor switch G22 and the eighth transistor switch G42 are turned on or turned off at high frequency synchronously under control of the control circuit 3. The signals for controlling the second transistor switch G12 and the fourth transistor switch G22 are complementary to each other with 50% duty cycle under control of the control circuit 3. The first transistor switch G11, the third transistor switch G21, the fifth transistor switch G31 and the seventh transistor switch G41 are turned on continuously under control of the control circuit 3. In some embodiments, a first dead time exists between the signals for controlling first transistor switch G11 and the third transistor switch G21, and a second dead time exists between the signals for controlling the second transistor switch G12 and the fourth transistor switch G22.

Please refer to FIG. 2. In some embodiments, the control circuit 3 includes a comparator 30, a NOT gate 31, two deadtime circuits 32, a first switching circuit 33, a second switching circuit 34, a first constant high-level circuit 35, and a second constant high-level circuit 36. A first terminal of the comparator 30 is connected to the input terminal of the non-isolated voltage conversion circuit 1, and configured to access a triangle wave signal of the AC voltage Vac. A second terminal of the comparator 30 is connected to a voltage source for receiving a reference voltage. The comparator 30 is configured to compare the triangle wave signal with the reference voltage and generate periodic pulse width modulation (PWM) signals accordingly to be outputted through the output terminal of the comparator 30. The NOT gate 31 is connected to the output terminal of the comparator 30 and is configured to receive the above-mentioned PWM signals and output an inversed PWM signal with inversed phase. One of the two deadtime circuits 32 is connected to the NOT gate 31 for receiving the inversed PWM signal with the inversed phase. The other of the two deadtime circuits 32 is connected to the output terminal of the comparator 30 for receiving the PWM signal. The two deadtime circuits 32 insert turn-off delay into the inverted PWM signal and the PWM signal respectively to generate a pair of complementary PWM signals with dead times. The first switching circuit 33 is connected between the two deadtime circuits 32 and the first transistor switch G11, the third transistor switch G21, the fifth transistor switch G31 and the seventh transistor switch G41. The first switching circuit 33 is configured to turn on or turn off the above-mentioned transistor switches according to the received PWM signals. The second switching circuit 34 is connected between the two deadtime circuits 32 and the second transistor switch G12, the fourth transistor switch G22, the sixth transistor switch G32 and the eighth transistor switch G42. The second switching circuit 34 is configured to turn on or turn off the above-mentioned transistor switches according to the received PWM signals. The first constant high-level circuit 35 is connected to the first switching circuit 33, and configured to allow the first transistor switch G11, the third transistor switch G21, the fifth transistor switch G31 and the seventh transistor switch G41 to be turned on continuously according to the switching operations of the first switching circuit 33. The second constant high-level circuit 36 is connected to the second switching circuit 34, and configured to allow the second transistor switch G12, the fourth transistor switch G22, the sixth transistor switch G32 and the eighth transistor switch G42 to be turned on continuously according to the switching operations of the second switching circuit 34.

The operations of the control circuit 3 will be described in detail as below. Please refer to FIGS. 1, 2 and 3. Firstly, the comparator 30 of the control circuit 3 compares the triangle wave signal with the constant DC voltage (for example 0.5 V reference voltage) and generates periodic and basic PWM signals. The basic PWM signals are converted into inverted PWM signals through an inverter (i.e., the NOT gate 31) of the control circuit 3. Then, the PWM signals and the inverted PWM signals are outputted to the two deadtime circuits 32, respectively. The two deadtime circuits 32 insert turn-off delay into the inverted PWM signals and the PWM signals respectively so as to generate a pair of complementary PWM signals with dead times. When the AC voltage Vac is positive, the first switching circuit 33 of the control circuit 3 conducts the path between the deadtime circuits 32 and the first transistor switch G11, the third transistor switch G21, the fifth transistor switch G31 and the seventh transistor switch G41. Meanwhile, the pair of complementary PWM signals with dead times are provided to the first transistor switch G11, the third transistor switch G21, the fifth transistor switch G31 and the seventh transistor switch G41, so that the above-mentioned transistor switches are turned on or turned off at high frequency. In addition, the second switching circuit 34 of the control circuit 3 conducts the path between the second constant high-level circuit 36 and the second transistor switch G12, the fourth transistor switch G22, the sixth transistor switch G32 and the eighth transistor switch G42. The second constant high-level circuit 36 outputs high-level signals to the above-mentioned transistor switches for allowing the second transistor switch G12, the fourth transistor switch G22, the sixth transistor switch G32 and the eighth transistor switch G42 to be turned on continuously, as shown in FIG. 4.

When the AC voltage Vac is negative, the first switching circuit 33 of the control circuit 3 conducts the path between the first constant high-level circuit 35 and the first transistor switch G11, the third transistor switch G21, the fifth transistor switch G31 and the seventh transistor switch G41. The first constant high-level circuit 35 outputs high-level signals to the above-mentioned transistor switches for allowing the first transistor switch G11, the third transistor switch G21, the fifth transistor switch G31 and the seventh transistor switch G41 to be turned on continuously. In addition, the second switching circuit 34 of the control circuit 3 conducts the path between the deadtime circuits 32 and the second transistor switch G12, the fourth transistor switch G22, the sixth transistor switch G32 and the eighth transistor switch G42. Meanwhile, the pair of complementary PWM signals with dead times are provided to the second transistor switch G12, the fourth transistor switch G22, the sixth transistor switch G32 and the eighth transistor switch G42, so that the above-mentioned transistor switches are turned on or turned off at high frequency, as shown in FIG. 5.

FIG. 3 depicts the main resonant current ILr flowing through the main resonant inductor (e.g., the first main resonant inductor L1) of the resonant circuit 20, the capacitor voltage Vcr of the main resonant capacitor (e.g., the first main resonant capacitor C1 or the second main resonant capacitor C2) of the resonant circuit 20, the auxiliary resonant current Is flowing through the auxiliary resonant inductor L3 of the soft switch circuit 21, the first output voltage Vac1 outputted through the first connection terminal T1 and the second connection terminal T2 of the output terminal of the non-isolated AC voltage conversion circuit 1, the second output voltage Vac2 outputted through the second connection terminal T2 and the third connection terminal T3 of the output terminal of the non-isolated AC voltage conversion circuit 1, the input current Ig flowing through the input terminal of the non-isolated AC voltage conversion circuit 1, the first load current flowing through the first load Z1, and the second load current flowing through the second load Z2.

In some embodiments, the non-isolated AC voltage conversion circuit 1 further includes an output filter circuit 4 for filtering and stabilizing the output of the non-isolated AC voltage conversion circuit 1. The output filter circuit 4 includes a first filter capacitor Cf1, a second filter capacitor Cf2, a third filter capacitor Cf3, a fourth filter capacitor Cf4 and an output filter inductor Lf. A first terminal of the first filter capacitor Cf1 is connected to the first connection terminal T1. A second terminal of the first filter capacitor Cf2 is connected to the fifth connection terminal 212 of the soft switch circuit 21. A first terminal of the second filter capacitor Cf2 is connected to the first connection terminal T1. A second terminal of the second filter capacitor Cf2 is connected to the second connection terminal T2. A first terminal of the third filter capacitor Cf3 is connected to the fifth connection terminal 212 of the soft switch circuit 21. A second terminal of the third filter capacitor Cf3 is connected to the third connection terminal T3. A first terminal of the fourth filter capacitor Cf4 is connected to the second connection terminal T2. A second terminal of the third filter capacitor Cf3 is connected to the third terminal T3. The output filter inductor Lf is connected between the fifth connection terminal 212 of the soft switch circuit 21 and the second connection terminal T2.

In some embodiments, the non-isolated AC voltage conversion circuit 1 further includes an output filter inductor Lin. The output filter inductor Lin is connected between the positive connection terminal Vin+ and the first switch bridge arm B1 for filtering and stabilizing the output of the non-isolated AC voltage conversion circuit 1.

In the embodiment, the non-isolated AC voltage conversion circuit utilizes the voltage conversion circuit 2 to cooperate with the first switch bridge arm B1 and the second switch bridge arm B2 to replace the autotransformer used in the conventional AC voltage conversion circuit. Consequently, the function of converting voltage is achieved. In addition, since the autotransformer is omitted, the non-isolated AC voltage conversion circuit 1 of the embodiment of the present disclosure can achieve the effects of reducing volume and weight. Furthermore, since the first switch bridge arm B1 and the second switch bridge arm B2 utilize soft switching operations, the cost of the switches is reduced, the electromagnetic interference EMI is reduced, and the conversion efficiency and power density of the non-isolated AC voltage conversion circuit 1 are enhanced. Moreover, since the control circuit 3 of the non-isolated AC voltage conversion circuit 1 only requires a voltage sensor to sense and determine the polarity of the AC voltage Vac, a controller with complex architecture (e.g., a microcontroller unit MCU or a digital signal processor DSP) is needn't to be employed in the control circuit 3. Consequently, the cost is reduced. In addition, the non-isolated AC voltage conversion circuit 1 of the embodiment of the present disclosure is applicable to the conditions with unbalanced loads and can provide active power and reactive power through the circuit topology and operation modes thereof. The effects of the non-isolated AC voltage conversion circuit 1 of the above embodiments are also presented in the non-isolated AC voltage conversion circuit of different embodiments described later, and will not be redundantly described in detailed hereafter.

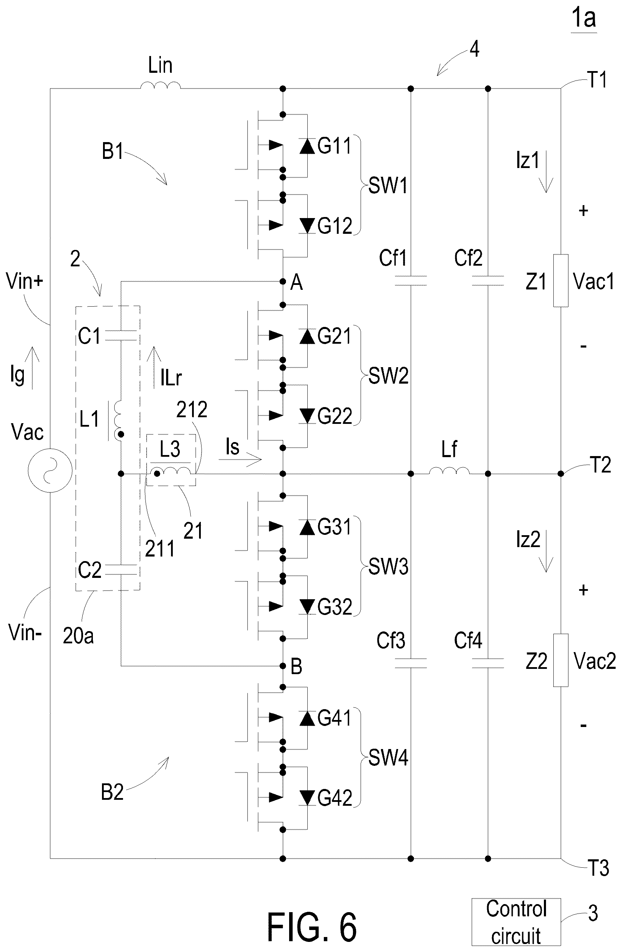

FIG. 6 is a schematic circuit diagram illustrating a non-isolated AC voltage conversion circuit according to a second embodiment of the present disclosure. Component parts and elements corresponding to those of the first embodiment are designated by identical numeral references, and detailed descriptions thereof are omitted. In comparison with the non-isolated AC voltage conversion circuit 1 of the first embodiment, the non-isolated AC voltage conversion circuit 1a of this embodiment includes a resonant circuit 20a including a first main resonant inductor L1, a main resonant capacitor C1 and a second main resonant capacitor C2. A first terminal of the first main resonant capacitor C1 is connected to the first node A. A second terminal of the first main resonant capacitor C1 is connected to a first terminal of the first main resonant inductor L1. A second terminal of the first main resonant inductor L1 is connected between a first terminal of the second main resonant capacitor C2 and the fourth connection terminal 211 of the soft switch circuit 21. A second terminal of the second inductor capacitor C2 is connected to the second node B. In some embodiments, the resonant circuit 20a and the auxiliary resonant inductor L3 may be implemented into an integrated magnetic module. In some embodiments, the first main resonant inductor L1 and the auxiliary resonant inductor L3 may be implemented into an integrated magnetic module.

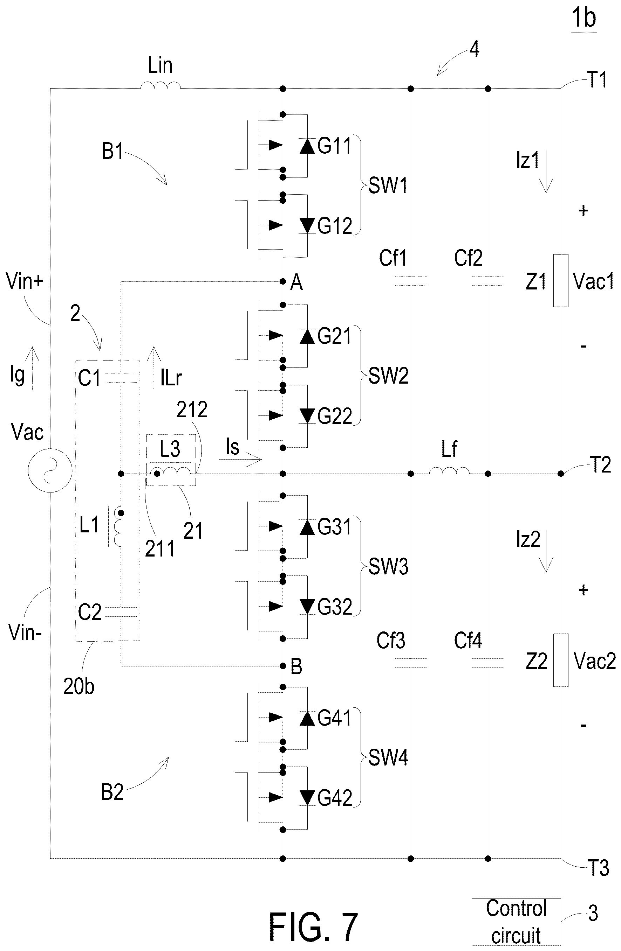

FIG. 7 is a schematic circuit diagram illustrating a non-isolated AC voltage conversion circuit according to a third embodiment of the present disclosure. Component parts and elements corresponding to those of the first embodiment are designated by identical numeral references, and detailed descriptions thereof are omitted. In comparison with the non-isolated AC voltage conversion circuit 1 of the first embodiment, the non-isolated AC voltage conversion circuit 1b of this embodiment includes a resonant circuit 20b including a first main resonant inductor L1, a main resonant capacitor C1 and a second main resonant capacitor C2. A first terminal of the first main resonant capacitor C1 is connected to the first node A. A second terminal of the first main resonant capacitor C1 is connected to a first terminal of the first main resonant inductor L1 and the fourth connection terminal 211 of the soft switch circuit 21. A second terminal of the first main resonant inductor L1 is connected to a first terminal of the second main resonant capacitor C2. A second terminal of the second main resonant capacitor C2 is connected to the second node B. In some embodiments, the resonant circuit 20b and the auxiliary resonant inductor L3 may be implemented into an integrated magnetic module. In some embodiments, the first main resonant inductor L1 and the auxiliary resonant inductor L3 may be implemented into an integrated magnetic module.

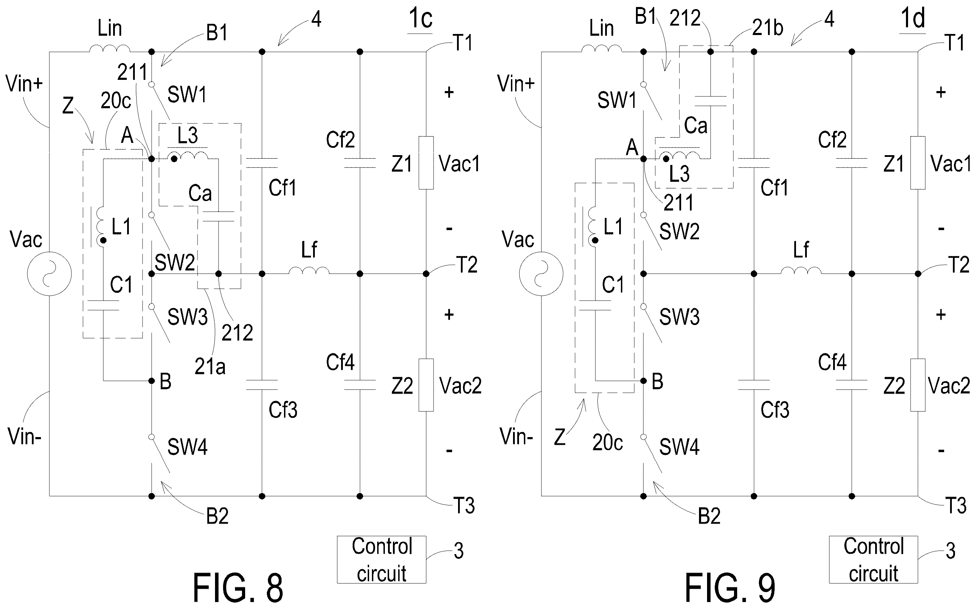

FIG. 8 is a schematic circuit diagram illustrating a non-isolated AC voltage conversion circuit according to a fourth embodiment of the present disclosure. Component parts and elements corresponding to those of the first embodiment are designated by identical numeral references, and detailed descriptions thereof are omitted. In comparison with the non-isolated AC voltage conversion circuit 1 of the first embodiment, the non-isolated AC voltage conversion circuit 1c of this embodiment includes a resonant circuit 20c including a first main resonant inductor L1 and a main resonant capacitor C1. The first main resonant inductor L1 and the main resonant capacitor C1 are connected in series between the first node A and the second node B. Preferably but not exclusively, a first terminal of the first main resonant inductor L1 is connected to the first node A. A second terminal of the first main resonant inductor L1 is connected to a first terminal of the first main resonant capacitor C1. A second terminal of the first main resonant capacitor C1 is connected to the second node B.

In addition, the non-isolated AC voltage conversion circuit 1c of this embodiment includes a soft switch circuit 21a including an auxiliary resonant inductor L3 and an auxiliary resonant capacitor Ca. The auxiliary resonant inductor L3 and the auxiliary resonant capacitor Ca are connected in series between the fourth connection terminal 211 and the fifth connection terminal of the soft switch circuit 21a. Preferably but not exclusively, a first terminal of the auxiliary resonant inductor L3 is connected to a first terminal of the auxiliary inductor capacitor Ca. A second terminal of the auxiliary resonant capacitor Ca is connected to the fifth connection terminal 212 of the soft switch circuit 21a and the second connection terminal T2.

In addition, in the embodiment, the fourth connection terminal 211 of the soft switch circuit 21a is connected to the first node A, and the fifth connection terminal 212 of the soft switch circuit 21a is connected to the second connection terminal T2.

In addition, each of the first switch SW1 and the second switch SW2 of the first switch bridge arm B1 and each of the third switch SW3 and the fourth switch SW4 of the second bridge arm B2 includes a single bidirectional transistor switch, respectively. Alternatively, each of the first switch SW1 and the second switch SW2 of the first switch bridge arm B1 and each of the third switch SW3 and the fourth switch SW4 of the second bridge arm B2 includes two transistor switches connected in series back-to-back, respectively.

FIG. 9 is a schematic circuit diagram illustrating a non-isolated AC voltage conversion circuit according to a fifth embodiment of the present disclosure. Component parts and elements corresponding to those of the first embodiment are designated by identical numeral references, and detailed descriptions thereof are omitted. In comparison with the non-isolated AC voltage conversion circuit 1c of the fourth embodiment of FIG. 8, the non-isolated AC voltage conversion circuit 1d of this embodiment includes a soft switch circuit 21b having a fourth connection terminal 211 connected to the first node A and a fifth connection terminal 212 connected to the first connection terminal T1.

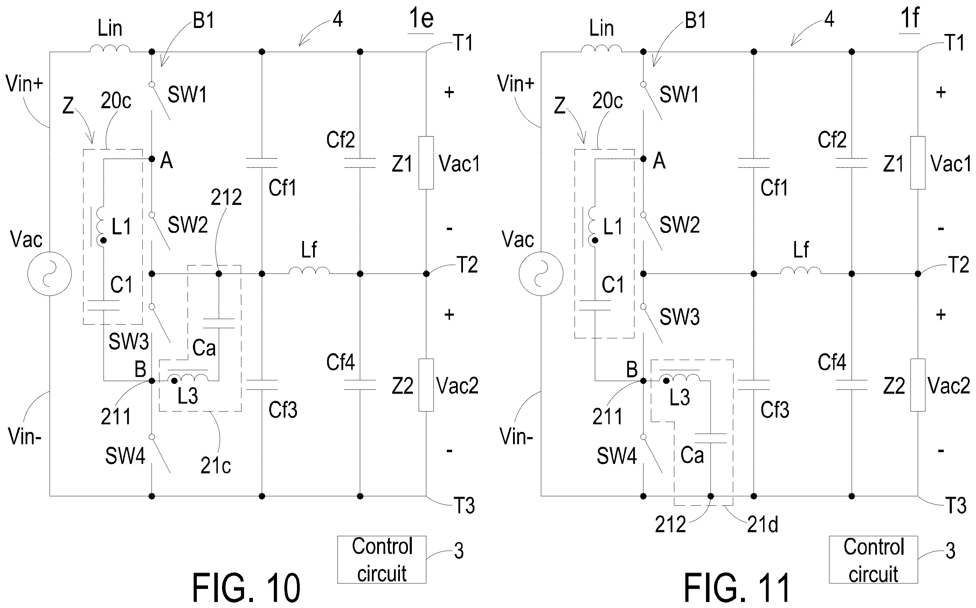

FIG. 10 is a schematic circuit diagram illustrating a non-isolated AC voltage conversion circuit according to a sixth embodiment of the present disclosure. Component parts and elements corresponding to those of the first embodiment are designated by identical numeral references, and detailed descriptions thereof are omitted. In comparison with the non-isolated AC voltage conversion circuit 1c of the fourth embodiment of FIG. 8, the non-isolated AC voltage conversion circuit 1e of this embodiment includes a soft switch circuit 21c having a fourth connection terminal 211 connected to the second node B and a fifth connection terminal 212 connected to the second connection terminal T2.

FIG. 11 is a schematic circuit diagram illustrating a non-isolated AC voltage conversion circuit according to a seventh embodiment of the present disclosure. Component parts and elements corresponding to those of the first embodiment are designated by identical numeral references, and detailed descriptions thereof are omitted. In comparison with the non-isolated AC voltage conversion circuit 1e of the sixth embodiment of FIG. 10, the non-isolated AC voltage conversion circuit 1f of this embodiment includes a soft switch circuit 21d having a fourth connection terminal 211 connected to the second node B and a fifth connection terminal 212 connected to the third connection terminal T3.

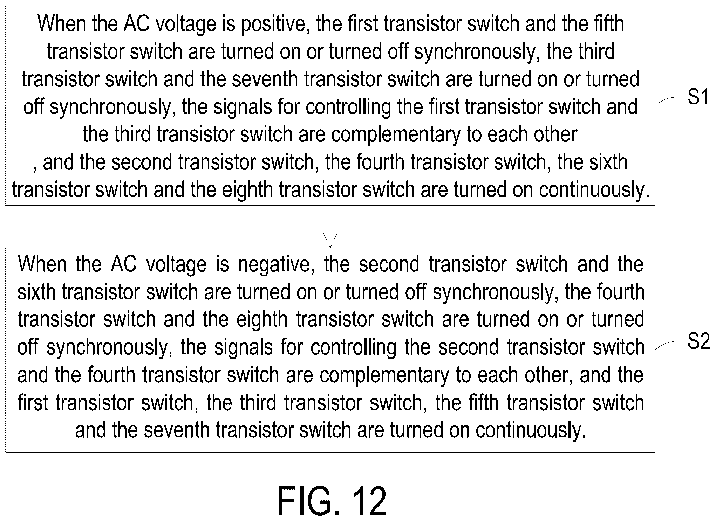

FIG. 12 is a flow chart illustrating a control method of the non-isolated AC voltage conversion circuit according to an embodiment of the present disclosure. The control method is applicable to the above-mentioned non-isolated AC voltage conversion circuits 1, 1a, 1b, 1c, 1d, 1e and 1f, and includes the following steps.

Firstly, a step S1 is performed. When the control circuit 3 determines that the AC voltage Vac is positive, the first transistor switch G11 and the fifth transistor switch G31 are turned on or turned off synchronously under control of the control circuit 3, the third transistor switch G21 and the seventh transistor switch G41 are turned on or turned off synchronously under control of the control circuit 3, the signals for controlling the first transistor switch G11 and the third transistor switch G21 are complementary to each other under control of the control circuit 3, and the second transistor switch G12, the fourth transistor switch G22, the sixth transistor switch G32 and the eighth transistor switch G42 are turned on continuously under control of the control circuit 3.

Then, a step S2 is performed. When the control circuit 3 determines that the AC voltage Vac is negative, the second transistor switch G12 and the sixth transistor switch G32 are turned on or turned off synchronously under control of the control circuit 3, the fourth transistor switch G22 and the eighth transistor switch G42 are turned on or turned off synchronously under control of the control circuit 3, the signals for controlling the second transistor switch G22 and the fourth transistor switch G42 are complementary with each other under control of the control circuit 3, and the first transistor switch G11, the third transistor switch G31, the fifth transistor switch G51 and the seventh transistor switch G71 are turned on continuously under control of the control circuit 3.

From the above descriptions, the non-isolated AC voltage conversion circuit of the present disclosure utilizes the voltage conversion circuit to cooperate with the first switch bridge arm and the second switch bridge arm to replace the autotransformer used in the conventional AC voltage conversion circuit. Consequently, the function of converting voltage is achieved. In addition, since the autotransformer is omitted, the non-isolated AC voltage conversion circuit of the present disclosure can achieve the effects of reducing volume and weight. Furthermore, since the first switch bridge arm and the second switch bridge arm utilize soft switching operations, the cost of the switches is reduced, the electromagnetic interference EMI is reduced, and the conversion efficiency and power density of the non-isolated AC voltage conversion circuit 1 are enhanced.

## Claims

1. A non-isolated AC voltage conversion circuit (1, 1a, 1b, 1c, 1d, 1e, 1f), **characterized by** comprising:
an input terminal having a positive connection terminal (Vin+) and a negative connection terminal (Vin-), and configured to receive an AC voltage;
an output terminal having a first connection terminal (T1), a second connection terminal (T2) and a third connection terminal (T3), wherein the third connection terminal (T3) is connected to the negative connection terminal (Vin-);
a first switch bridge arm (B1) connected between the first connection terminal (T1) and the second connection terminal (T2), and comprising a first switch (SW1) and a second switch (SW2) connected in series, wherein the first switch (SW1) and the second switch (SW2) are connected with each other to form a first node (A) therebetween;
a second switch bridge arm (B2) connected between the second connection terminal (T2) and the third connection terminal (T3), and comprising a third switch (SW3) and a fourth switch (SW4) connected in series, wherein the third switch (SW3) and the fourth switch (SW4) are connected with each other to form a second node (B) therebetween; and
a voltage conversion circuit (2), comprising:
a resonant circuit (20, 20a, 20b, 20c) comprising at least one main resonant inductor and at least one main resonant capacitor, wherein the at least one main resonant inductor and the at least one main resonant capacitor are connected in series between the first node (A) and the second node (B); and
a soft switch circuit (21, 21a, 21b, 21c) having a fourth connection terminal (211) and a fifth connection terminal (212), and configured to provide soft switching conditions at transient times when the first switch (SW1), the second switch (SW2), the third switch (SW3), and the fourth switch (SW4) are turned on and turned off, respectively,
wherein the fourth connection terminal (211) is connected to at least one of the first node (A) and the second node (B), and the fifth connection terminal (212) is connected to one of the first connection terminal (T1), the second connection terminal (T2) and the third connection terminal (T3), or the fourth connection terminal (211) is connected to the at least one main resonant inductor, and the fifth connection terminal (212) is connected to the second connection terminal (T2).

2. The non-isolated AC voltage conversion circuit (1, 1a, 1b, 1c, 1d, 1e, 1f) according to claim 1, further comprising a control circuit (3), wherein the control circuit (3) is electrically connected to the first switch (SW1), the second switch (SW2), the third switch (SW3), and the fourth switch (SW4), and configured to control the operations of the first switch (SW1), the second switch (SW2), the third switch (SW3), and the fourth switch (SW4), wherein the control circuit (3) is connected to the input terminal, and configured to determine whether the AC voltage is positive or negative and control the operations of the first switch (SW1), the second switch (SW2), the third switch (SW3), and the fourth switch (SW4) according to the determining results.

3. The non-isolated AC voltage conversion circuit (1, 1a, 1b, 1c, 1d, 1e, 1f) according to claim 1 or 2, wherein the first switch bridge arm (B1) and the second switch bridge arm (B2) comprise half-bridge arms, respectively, wherein each of the first switch (SW1), the second switch (SW2), the third switch (SW4), and the fourth switch (SW4) comprises two transistor switches (G11, G12, G21, G22, G31, G32, G41, G42) connected in series back-to-back,
wherein the first switch (SW1) comprises a first transistor switch (G11) and a second transistor switch (G12), the second switch (SW2) comprises a third transistor switch (G21) and a fourth transistor switch (G22), the third switch (SW3) comprises a fifth transistor switch (G31) and a sixth transistor switch (G32), and the fourth switch (SW4) comprises a seventh transistor switch (G41) and an eighth transistor switch (G42), wherein the first transistor switch (G11), the second transistor switch (G12), the third transistor switch (G21), the fourth transistor switch (G22), the fifth transistor switch (G31), the sixth transistor switch (G32), the seventh transistor switch (G41) and the eighth transistor switch (G42) are sequentially connected in series between the first connection terminal (T1) and the third connection terminal (T3),
wherein when the AC voltage is positive, the first transistor switch (G11) and the fifth transistor switch (G31) are turned on or turned off synchronously, the third transistor switch (G21) and the seventh transistor switch (G41) are turned on or turned off synchronously, the signals for controlling the first transistor switch (G11) and the third transistor switch (G21) are complementary to each other, and the second transistor switch (G12), the fourth transistor switch (G22), the sixth transistor switch (G32) and the eighth transistor switch (G42) are turned on continuously,
wherein when the AC voltage is negative, the second transistor switch (G12) and the sixth transistor switch (G32) are turned on or turned off synchronously, the fourth transistor switch (G22) and the eighth transistor switch (G42) are turned on or turned off synchronously, the signals for controlling the second transistor switch (G12) and the fourth transistor switch (G22) are complementary to each other, and the first transistor switch (G11), the third transistor switch (G21), the fifth transistor switch (G31) and the seventh transistor switch (G41) are turned on continuously.

4. The non-isolated AC voltage conversion circuit (1, 1a, 1b, 1c, 1d, 1e, 1f) according to any of the preceding claims 1 to 3, wherein the soft switch circuit (21, 21a, 21b, 21c) comprises an auxiliary resonant inductor (L3), a first terminal of the auxiliary resonant inductor (l3) is connected to the fourth connection terminal (211) of the soft switch circuit (21, 21a, 21b, 21c), and a second terminal of the auxiliary resonant inductor (L3) is connected to the fifth connection terminal (212) of the soft switch circuit (21, 21a, 21b, 21c).

5. The non-isolated AC voltage conversion circuit (1) according to any of the preceding claims 1 to 4, wherein the at least one main resonant inductor comprises a first main resonant inductor (L1) and a second main resonant inductor (L2), and the at least one main resonant capacitor comprises a first main resonant capacitor (C1) and a second main resonant capacitor (C2), wherein a first terminal of the first main resonant capacitor (C1) is connected to the first node (A), a second terminal of the first main resonant capacitor (C1) is connected to a first terminal of the first main resonant inductor (L1), a second terminal of the first main resonant inductor (L1) is connected to a first terminal of the second main resonant inductor (L2), a second terminal of the second main resonant inductor (L2) is connected to a first terminal of the second main resonant capacitor (C2), and a second terminal of the second main resonant capacitor (C2) is connected to the second node (B), wherein the fourth connection terminal (211) of the soft switch circuit (21) is connected to the second terminal of the first main resonant inductor (L1) and the first terminal of the second main resonant inductor (L1), and the fifth connection terminal (212) of the soft switch circuit (21) is connected to the second connection terminal (T2).

6. The non-isolated AC voltage conversion circuit (1a) according to any of the preceding claims 1 to 4, wherein the at least one main resonant inductor comprises a first main resonant inductor (L1), and the at least one main resonant capacitor comprises a first main resonant capacitor (C1) and a second main resonant capacitor (C2), wherein a first terminal of the first main resonant capacitor (C1) is connected to the first node (A), a second terminal of the first main resonant capacitor (C1) is connected to a first terminal of the first main resonant inductor (L1), a second terminal of the first main resonant inductor (L1) is connected to a first terminal of the second main resonant capacitor (C2), a second terminal of the second main resonant capacitor (C2) is connected to the second node (B), wherein the fourth connection terminal (211) of the soft switch circuit (21) is connected to the second terminal of the first main resonant inductor (L1) and the first terminal of the second main resonant capacitor (C2), and the fifth connection terminal (212) of the soft switch circuit (21) is connected to the second connection terminal (T2).

7. The non-isolated AC voltage conversion circuit (1b) according to any of the preceding claims 1 to 4, wherein the at least one main resonant inductor comprises a first main resonant inductor (L1), and the at least one main resonant capacitor comprises a first main resonant capacitor (C1) and a second main resonant capacitor (C2), wherein a first terminal of the first main resonant capacitor (C1) is connected to the first node (A), a second terminal of the first main resonant capacitor (C1) is connected to a first terminal of the first main resonant inductor (L1), a second terminal of the first main resonant inductor (L1) is connected to a first terminal of the second main resonant capacitor (C2), a second terminal of the second main resonant capacitor (C2) is connected to the second node (B), wherein the fourth connection terminal (211) of the soft switch circuit (21) is connected to the first terminal of the first main resonant inductor (L1), and the fifth connection terminal (212) of the soft switch circuit (21) is connected to the second connection terminal (T2).

8. The non-isolated AC voltage conversion circuit (1c, 1d, 1e, 1f) according to any of the preceding claims 1 to 3, wherein the at least one resonant inductor comprises a first main resonant inductor (L1), and the at least one main resonant capacitor comprises a first main resonant capacitor (C1), wherein the first main resonant inductor (L1) and the first main resonant capacitor (C1) are connected in series between the first node (A) and the second node (B),
wherein the soft switch circuit (21a, 21b, 21c, 21d) comprises an auxiliary resonant inductor (L3) and an auxiliary resonant capacitor (Ca), wherein a first terminal of the auxiliary resonant inductor (L3) is connected to the fourth connection terminal (211) of the soft switch circuit (21a), a second terminal of the auxiliary resonant inductor (L3) is connected to a first terminal of the auxiliary resonant capacitor (Ca), and a second terminal of the auxiliary resonant capacitor (Ca) is connected to the fifth connection terminal (212);
wherein the fourth connection terminal (211) is connected to the first node (A), and the fifth connection terminal (212) is connected to the second connection terminal (T2), or
wherein the fourth connection terminal (211) is connected to the first node
(A), and the fifth connection terminal (212) is connected to the first connection terminal (T1), or
wherein the fourth connection terminal (211) is connected to the second node (B), and the fifth connection terminal (212) is connected to the second connection terminal (T2), or
wherein the fourth connection terminal (211) is connected to the second node (B), and the fifth connection terminal (212) is connected to the third connection terminal (T3).

9. A non-isolated AC voltage conversion circuit (1, 1a, 1b, 1c, 1e), **characterized by** comprising:
an input terminal having a positive connection terminal (Vin+) and a negative connection terminal (Vin-) and configured to receive an AC voltage;
an output terminal having a first connection terminal (T1), a second connection terminal (T2) and a third connection terminal (T3), wherein the third connection terminal (T3) is connected to the negative connection terminal (Vin-);
a first switch bridge arm (B1) connected between the first connection terminal (T1) and the second connection terminal (T2), and comprising a first switch (SW1) and a second switch (SW2) connected in series, wherein the first switch (SW1) and the second switch (SW2) are connected with each other to form a first node (A) therebetween;
a second switch bridge arm (B2) connected between the second connection terminal (T2) and the third connection terminal (T3), and comprising a third switch (SW3) and a fourth switch (SW4) connected in series, wherein the third switch (SW3) and the fourth switch (SW4) are connected with each other to form a second node (B) therebetween; and
a voltage conversion circuit (2), comprising:
a resonant circuit (20, 20a, 20b, 20c) comprising at least one main resonant inductor and at least one main resonant capacitor, wherein the at least one main resonant inductor and the at least one main resonant capacitor are connected in series between the first node (A) and the second node (B); and
a soft switch circuit (21, 21a, 21b, 21c) comprising an auxiliary resonant inductor (L3), a fourth connection terminal (211) and a fifth connection terminal (212), and configured to provide soft switching conditions at transient times when the first switch (SW1), the second switch (SW2), the third switch (SW3) and the fourth switch (SW4) are turned on and turned off, respectively, wherein the auxiliary resonant inductor (L3) is connected between the fourth connection terminal (211) and the fifth connection terminal (212), the fourth connection terminal (211) is connected to the at least one main resonant inductor, and the fifth connection terminal (212) is connected to the second connection terminal (T2).

10. The non-isolated AC voltage conversion circuit (1, 1a, 1b, 1c, 1e) according to claim 9, further comprising a control circuit (3), wherein the control circuit (3) is connected to the first switch (SW1), the second switch (SW2), the third switch (SW3) and the fourth switch (SW4), and configured to control the operations of the first switch (SW1), the second switch (SW2), the third switch (SW3) and the fourth switch (SW4), wherein the control circuit (3) is connected to the input terminal, and configured to determine whether the AC voltage is positive or negative and control the operations of the first switch (SW1), the second switch (SW2), the third switch (SW3) and the fourth switch (SW4) according to the determining results.

11. The non-isolated AC voltage conversion circuit (1, 1a, 1b, 1c, 1e) according to claim 9 or 10, wherein the first switch bridge arm (B1) and the second switch bridge arm (B2) comprise half-bridge arms, respectively, wherein each of the first switch (SW1), the second switch (SW2), the third switch (SW3) and the fourth switch (SW4) comprises two transistor switches (G11, G12, G21, G22, G31, G32, G41, G42) connected in series back-to-back,
wherein the first switch (SW1) comprises a first transistor switch (G11) and a second transistor switch (G12), the second switch (SW2) comprises a third transistor switch (G21) and a fourth transistor switch (G22), the third switch (SW3) comprises a fifth transistor switch (G31) and a sixth transistor switch (G32), and the fourth switch (SW4) comprises a seventh transistor switch (G41) and an eighth transistor switch (G42), wherein the first transistor switch (G11), the second transistor switch (G12), the third transistor switch (G21), the fourth transistor switch (G22), the fifth transistor switch (G31), the sixth transistor switch (G32), the seventh transistor switch (G41) and the eighth transistor switch (G42) are sequentially connected in series between the first connection terminal (T1) and the third connection terminal (T3), wherein when the AC voltage is positive, the first transistor switch (G11) and the fifth transistor switch (G31) are turned on or turned off synchronously, the third transistor switch (G21) and the seventh transistor switch (G41) are turned on or turned off synchronously, the signals for controlling the first transistor switch (G11) and the third transistor switch (G21) are complementary to each other, and the second transistor switch (G12), the fourth transistor switch (G22), the sixth transistor switch (G32) and the eighth transistor switch (G42) are turned on continuously, wherein when the AC voltage is negative, the second transistor switch (G12) and the sixth transistor switch (G32) are turned on or turned off synchronously, the fourth transistor switch (G22) and the eighth transistor switch (G42) are turned on or turned off synchronously, the signals for controlling the second transistor switch (G12) and the fourth transistor switch (G22) are complementary to each other, and the first transistor switch (G11), the third transistor switch (G21), the fifth transistor switch (G31) and the seventh transistor switch (G41) are turned on continuously.

12. The non-isolated AC voltage conversion circuit (1, 1a, 1b, 1c, 1e) according to any of the preceding claims 9 to 11, wherein the at least one main resonant inductor comprises a first main resonant inductor (L1) and a second main resonant inductor (L2), and the at least one main resonant capacitor comprises a first main resonant capacitor (C1) and a second main resonant capacitor (C2), wherein a first terminal of the first main resonant capacitor (C1) is connected to the first node (A), a second terminal of the first main resonant capacitor (C1) is connected to a first terminal of the first main resonant inductor (L1), a second terminal of the first main resonant inductor (L1) is connected to a first terminal of the second main resonant inductor (L2), a second terminal of the second main resonant inductor (L2) is connected to a first terminal of the second main resonant capacitor (C2), and a second terminal of the second main resonant capacitor (C2) is connected to the second node (B).

13. The non-isolated AC voltage conversion circuit (1, 1a, 1b, 1c, 1e) according to any of the preceding claims 9 to 11, wherein the at least one main resonant inductor comprises a first main resonant inductor (L1), and the at least one main resonant capacitor comprises a first main resonant capacitor (C1) and a second main resonant capacitor (C2), wherein a first terminal of the first main resonant capacitor (C1) is connected to the first node (A), a second terminal of the first main resonant capacitor (C1) is connected to a first terminal of the first main resonant inductor (L1), a second terminal of the first main resonant inductor (L1) is connected to a first terminal of the second main resonant capacitor (C2), and a second terminal of the second main resonant capacitor (C2) is connected to the second node (B).

14. A control method for a non-isolated AC voltage conversion circuit (1, 1a, 1b, 1c, 1d, 1e, 1f), wherein the non-isolated AC voltage conversion circuit (1, 1a, 1b, 1c, 1d, 1e, 1f) comprises an input terminal, an output terminal, a first switch bridge arm (B1), a second switch bridge arm (B2) and a voltage conversion circuit (2), wherein the input terminal comprises a positive connection terminal (Vin+) and a negative connection terminal (Vin-) and is configured to receive AC voltage, the output terminal comprises a first connection terminal (T1), a second connection terminal (T2) and a third connection terminal (T3), and the third connection terminal (T3) is connected to the negative connection terminal (Vin-), wherein the first switch bridge arm (B1) is connected between the first connection terminal (T1) and the second connection terminal (T2) and comprises a first switch (SW1) and a second switch (SW2) connected in series, the first switch (SW1) and the second switch (SW2) are connected with each other to form a first node (A) therebetween, the second switch bridge arm (B2) is connected between the second connection terminal (T2) and the third connection terminal (T3) and comprises a third switch (SW3) and a fourth switch (SW4) connected in series, the third switch (SW3) and the fourth switch (SW4) are connected with each other to form a second node (B) therebetween, wherein the voltage conversion circuit (2) comprises a resonant circuit (20, 20a, 20b, 20c) and a soft switch circuit (21, 21a, 21b, 21c), the resonant circuit (20, 20a, 20b, 20c) comprises at least one main resonant inductor and at least one main resonant capacitor, the at least one main resonant inductor and the at least one main resonant capacitor are connected in series between the first node (A) and the second node (B), wherein the soft switch circuit (21, 21a, 21b, 21c) comprises a fourth connection terminal (211) and a fifth connection terminal (212), the fourth connection terminal (211) is connected to at least one of the first node (A) and the second node (B), and the fifth connection terminal (212) is connected to one of the first connection terminal (T1), the second connection terminal (T2) and the third connection terminal (T3), or the fourth connection terminal (211) is connected to the at least one main resonant inductor, and the fifth connection terminal (212) is connected to the second connection terminal (T2), wherein the soft switch circuit (21, 21a, 21b, 21c) is configured to provide soft switching conditions at transient times when the first switch (SW1), the second switch (SW2), the third switch (SW3) and the fourth switch (SW4) are turned on and turned off, respectively, wherein the first switch (SW1) comprises a first transistor switch (G11) and a second transistor switch (G12), the second switch (SW2) comprises a third transistor switch (G21) and a fourth transistor switch (G22), the third switch (SW3) comprises a fifth transistor switch (G31) and a sixth transistor switch (G32), and the fourth switch (SW4) comprises a seventh transistor switch (G41) and an eighth transistor switch (G42), wherein the first transistor switch (G11), the second transistor switch (G12), the third transistor switch (G21), the fourth transistor switch (G22), the fifth transistor switch (G31), the sixth transistor switch (G32), the seventh transistor switch (G41) and the eighth transistor switch (G42) are sequentially connected in series between the first connection terminal (T1) and the third connection terminal (T3), **characterized in that** the control method comprises steps of:
(S1) when the AC voltage is positive, the first transistor switch (G11) and the fifth transistor switch (G31) are turned on or turned off synchronously, the third transistor switch (G21) and the seventh transistor switch (G41) are turned on or turned off synchronously, the signals for controlling the first transistor switch (G11) and the third transistor switch (G21) are complementary to each other, and the second transistor switch (G12), the fourth transistor switch (G22), the sixth transistor switch (G32) and the eighth transistor switch (G42) are turned on continuously; and
(S2) when the AC voltage is negative, the second transistor switch (G12) and the sixth transistor switch (G32) are turned on or turned off synchronously, the fourth transistor switch (G22) and the eighth transistor switch (G42) are turned on or turned off synchronously, the signals for controlling the second transistor switch (G12) and the fourth transistor switch (G22) are complementary to each other, and the first transistor switch (G11), the third transistor switch (G21), the fifth transistor switch (G31) and the seventh transistor switch (G41) are turned on continuously.

15. The control method according to claim 14, wherein the non-isolated AC voltage conversion circuit (1, 1a, 1b, 1c, 1d, 1e, 1f) comprises a control circuit (3), wherein the control circuit (3) is connected to the first switch (SW1), the second switch (SW2), the third switch (SW3) and the fourth switch (SW4), and configured to control the operations of the first switch (SW1), the second switch (SW2), the third switch (SW3) and the fourth switch (SW4), wherein the control circuit (3) is connected to the input terminal, and configured to determine whether the AC voltage is positive or negative and control the operations of the first switch (SW1), the second switch (SW2), the third switch (SW3) and the fourth switch (SW4) according to the determining results.
